# EUROPEAN PATENT APPLICATION

(11) **EP 4 614 703 A1**
(43) Date of publication of application: **10.09.2025**
(21) Application number: 22965429.8
(22) Date of filing: 14.11.2022
(51) Int. Cl.: H01M 50/244, H01M 50/233

(54) **BOX BODY OF BATTERY, BATTERY, ELECTRIC DEVICE AND ENERGY STORAGE SYSTEM**

(71) Applicant: Contemporary Amperex Technology (Hong Kong) Limited, Central (HK)
(72) Inventor: LUO, Hao, Ningde City, Fujian 352100 (CN); ZHANG, Hua, Ningde City, Fujian 352100 (CN); PENG, Haoran, Ningde City, Fujian 352100 (CN); ZHOU, Xinhua, Ningde City, Fujian 352100 (CN)
(74) Representative: Ziebig Hengelhaupt Intellectual Property Attorneys Patentanwaltskanzlei PartGmbB
(86) International application number: PCT/CN2022/131792
(87) International publication number: WO 2024/103236

(57) **Abstract**

Embodiments of this application provide a box of a battery, a battery, an electric device, and an energy storage system. A first surface of a first wall of the box of the battery is provided with a mounting member, where a friction coefficient between the mounting member and a bearing surface of a bearing part is less than a friction coefficient between the first surface and the bearing surface, and when the box of the battery is carried on the bearing surface, the first surface faces the bearing surface. For the box of the battery, the battery, the electric device, and the energy storage system provided in the embodiments of this application, the mounting efficiency of the box of the battery can be improved.

## Description

### TECHNICAL FIELD

This application relates to the field of energy storage devices, and in particular, to a box of a battery, a battery, an electric device, and an energy storage system.

### BACKGROUND

At present, in the process of mounting a box of a battery, the bottom wall of the box of the battery is usually in direct contact with the surface of a bearing part, which generates significant resistance when the box moves relative to the bearing part, thus affecting the mounting efficiency of the box of the battery.

Therefore, how a box of a battery is provided to improve the efficiency of mounting the box to a bearing part has become an urgent technical problem to be solved in the art.

### SUMMARY

Embodiments of this application provide a box, a battery, an electric device, and an energy storage system, which can improve the efficiency of mounting the box of the battery to a bearing part.

According to a first aspect, a box of a battery is provided, where a first surface of a first wall of the box is provided with a mounting member, where a friction coefficient between the mounting member and a bearing surface of a bearing part is less than a friction coefficient between the first surface and the bearing surface, and when the box is carried on the bearing surface, the first surface faces the bearing surface.

Thus, in the embodiments of this application, the friction coefficient between the mounting member and the surface of the bearing part is relatively small. In this way, as compared with the situation in which no mounting member is provided on the box and relative movement occurs between the first surface and the bearing surface of the bearing part, during a mounting process of the box, resistance generated by the relative movement between the mounting member and the bearing surface of the bearing part is relatively small, which is conducive to the rapid mounting and dismounting of the box to and from the bearing part. In addition, the relatively small friction coefficient between the mounting member and the surface of the bearing part leads to less wear on the surfaces of the box and the bearing part, which can reduce damage to metal coatings of the box and the bearing part, thus prolonging the service life of the box and the bearing part. Moreover, this method features a simple structure and low costs.

In some possible embodiments, the friction coefficient between the mounting member and the bearing surface of the bearing part is less than or equal to 0.3, which can reduce the resistance generated during the relative movement between the box and the bearing part, thereby improving the efficiency of mounting and dismounting the box to and from the bearing part.

In some possible embodiments, a material of the mounting member includes plastic. In the embodiments of this application, since plastic has characteristics such as self-lubricity and low friction coefficient, using plastic as the material of the mounting member is conducive to reducing friction between the box of the battery and the bearing surface of the bearing part, thus reducing resistance generated during the relative movement between the box and the bearing part. This improves the operation efficiency of mounting and dismounting the box of the battery to and from the bearing part. Furthermore, plastic is easy to process and purchase, which reduces the processing costs.

In some possible embodiments, the material of the mounting member includes polyoxymethylene, polypropylene, polycarbonate, or polyamide. Thus, using polyoxymethylene, polypropylene, polycarbonate, or polyamide, which have characteristics such as lubricity and low friction coefficient, as the material of the mounting member, is conducive to reducing the friction between the box of the battery and the bearing surface of the bearing part in the process of mounting and dismounting the box of the battery to and from the bearing part, thereby reducing the resistance generated during the relative movement between the box and the bearing part. This facilitates the push-in and pull-out of the box of the battery and improves the operation efficiency of mounting and dismounting the box of the battery. Moreover, the material has relatively low costs and is easy to process and purchase.

In some possible embodiments, the first surface is provided with at least two mounting members that are spaced apart. Thus, in the embodiments of this application, according to actual needs, a plurality of mounting members can be spaced apart on the first surface of the first wall of the box of the battery, which is conducive to increasing a contact area between the box of the battery and the bearing surface of the bearing part, so that weight of the box of the battery is evenly distributed and the stressed structure is improved. This reduces the situation in which the first wall of the box comes into contact with the bearing surface of the bearing part when the weight of the box is too heavy for the mounting member to support.

In some possible embodiments, the mounting member is arranged at an edge of the first wall. In the embodiments of this application, when the box is mounted or dismounted to and from the bearing part, an edge position of the box of the battery is prone to friction or collision with the bearing part. Therefore, through the provision of the mounting member at the edge position of the first wall of the box of the battery, the wear between the edge position of the first wall of the box and the bearing part can be reduced, thereby enhancing the safety in the process of mounting and dismounting the box of the battery to and from the bearing part.

In some possible embodiments, the mounting member is a strip-shaped structure extending along a first direction, where the first direction is parallel to the first surface, and when the box is placed on the bearing part, the first direction is parallel to a direction of relative movement between the box and the bearing part. Thus, in the embodiments of this application, the mounting member is arranged as the strip-shaped structure extending along the first direction and the first direction is parallel to the direction of relative movement between the box and the bearing part, so that the push-in and pull-out of the box of the battery on the bearing part become more rapid, which is conducive to improving the operation efficiency of mounting and dismounting the box of the battery to and from the bearing part. Furthermore, this method features a simple structure and ease in processing.

In some possible embodiments, the first wall is further provided with a limiting structure, where the limiting structure is configured to limit movement of the mounting member in a second direction, the second direction being parallel to the first surface and perpendicular to the first direction. In the embodiments of this application, when there is a deviation between the position of the box of the battery and the mounting locking position during the mounting process and position correction needs to be implemented, or when the box of the battery is subjected to external impact during transportation, the box of the battery inevitably experiences lateral friction in the second direction, where the second direction is parallel to the first surface and perpendicular to the first direction. However, the mounting member has relatively weak resistance to friction in the second direction, which may result in sliding or detachment of the mounting member, thereby causing the first wall of the box to come into contact with the bearing surface of the bearing part. Consequently, the efficiency of mounting and dismounting of the box to and from the bearing part is reduced due to the relatively great resistance generated by the relative movement between the first wall of the box and the bearing surface of the bearing part. The provision of the limiting structure on the first wall to limit the movement of the mounting member in the second direction reduces the contact between the first wall of the box and the bearing surface of the bearing part due to sliding or detachment of the mounting member along the second direction, which is conducive to improving the speed of mounting and dismounting the mounting member to and from the bearing part.

In some possible embodiments, the limiting structure is a convex structure protruding from the first surface, which alleviates sliding of the mounting member along the second direction. In addition, the convex structure is arranged outside the box, reducing the occupation of internal space in the box of the battery and increasing space utilization of the box.

In some possible embodiments, the convex structure extends along the first direction. In the embodiments of this application, through the arrangement of the convex structure of the limiting structure extending along the first direction, the effect of fixation of the mounting member by the convex structure can be improved, alleviating the sliding or detachment of the mounting member along the second direction. Furthermore, the structure is simple and easy to process.

In some possible embodiments, the convex structure is provided on each of two sides of the mounting member on the box in the second direction. Thus, in the embodiments of this application, in the second direction, through the provision of one convex structure on each of the left and right sides of the mounting member on the first wall of the box of the battery to limit the mounting member between the two convex structures, the effect of fixation of the mounting member is further improved. This is conducive to alleviating the sliding of the mounting member on the first wall of the box of the battery along the second direction, and improving the efficiency of mounting and dismounting the box of the battery to and from the bearing part.

In some possible embodiments, in a third direction, a dimension of the convex structure is smaller than a dimension of the mounting member, the third direction being perpendicular to the first surface. In the embodiments of this application, due to a typically high friction coefficient of the material of the convex structure, contact between the convex structure and the bearing surface of the bearing part increases the resistance encountered during the mounting and dismounting of the box to and from the bearing part, reducing the speed of mounting and dismounting the box to and from the bearing part. Through the arrangement that the dimension of the convex structure in the third direction is smaller than the dimension of the mounting member in the third direction, the problem of a low mounting speed caused by contact between the convex structure and the bearing surface of the bearing part can be alleviated effectively, thereby improving the speed of mounting and dismounting the box to and from the bearing part. In addition, damage to the surface coatings of the box and the bearing part caused by rigid friction between the convex structure and the bearing part can be reduced.

In some possible embodiments, the convex structure includes a main body portion and an extension portion, where the main body portion extends along the third direction, and the extension portion is connected to an end of the main body portion away from the first surface and extends along a direction approaching the mounting member, thereby further enhancing the effect of fixation of the mounting member by the convex structure.

In some possible embodiments, the convex structure of the mounting member on each of two sides in the second direction and the first surface form an accommodating groove, an opening of the accommodating groove is opposite the first surface, and the mounting member is partially accommodated in the accommodating groove. Thus, in the embodiments of this application, the convex structure on each of two sides of the mounting member in the second direction and the first surface of the box form the accommodating groove for fixing the mounting member, which can effectively alleviate the sliding and detachment of the mounting member along the second direction. In addition, through the arrangement that the mounting member is partially accommodated in the accommodating groove, contact between the convex structure and the bearing surface of the bearing part can be avoided, thereby reducing the damage to the surface coatings of the box and the bearing part.

In some possible embodiments, the limiting structure is an accommodating groove recessed in the first surface, an opening of the accommodating groove is flush with the first surface, and the mounting member is partially accommodated in the accommodating groove. Thus, the limiting structure being arranged as the accommodating groove recessed in the first surface of the first wall of the box can limit the sliding or detachment of the mounting member along the second direction. Moreover, since the mounting member is partially recessed in the accommodating groove, the problem of slow mounting speed caused by a large resistance generated during direct relative movement between the first wall of the box and the bearing part can be alleviated and the wear on the surfaces of the box and bearing part can be avoided. In addition, design height of the box of the battery in the third direction can be reduced, saving a space reserved for the box in a battery cabinet and increasing space utilization of the battery cabinet.

In some possible embodiments, in the second direction, a dimension of the opening is smaller than a dimension of a bottom wall of the accommodating groove, where the bottom wall is a wall of the accommodating groove opposite the opening. Thus, the arrangement that the dimension of the opening of the accommodating groove is smaller than the dimension of the bottom wall of the accommodating groove helps the mounting member to be fixed in the accommodating groove and alleviates the sliding or detachment of the mounting member along the second direction and the third direction, which is conducive to improving the effect of limitation on the mounting member by the limiting structure.

In some possible embodiments, a cross-section of the accommodating groove perpendicular to the first direction is an inverted trapezoid. Thus, through the arrangement that the cross-section of the accommodating groove perpendicular to the first direction is the inverted trapezoid, the sliding of the mounting member along the second direction and third direction is limited. Furthermore, the solution provides a simple design structure and ease of molding and processing, resulting in lower manufacturing costs.

In some possible embodiments, the limiting structure is integrally formed with the box, which is conducive to improving the efficiency of processing and assembling the box of the battery.

In some possible embodiments, the mounting member and the first surface are fixed via an adhesive. In the embodiments of this application, the mounting member can be fixed to the first surface of the first wall of the box via an adhesive without damaging the first wall of the box of the battery. The fixing method is simple and reliable, conducive to reducing processing costs.

In some possible embodiments, the mounting member and the first wall are connected via a bolt, where the bolt penetrates the mounting member and is partially accommodated in the first wall, so that the effect of fixation of the mounting member to the first surface of the first wall of the box of the battery can be further improved, alleviating sliding and detachment of the mounting member on the first wall.

In some possible embodiments, the bolt does not protrude from a surface of the mounting member in contact with the bearing part. Thus, in the embodiments of this application, through the arrangement that the bolt does not protrude from the surface of the mounting member in contact with the bearing part, the damage to the surface coating of the bearing part caused by the relative movement between the bolt and the bearing surface of the bearing part can be effectively reduced during the mounting and dismounting of the box of the battery to and from the bearing surface of the bearing part, where the damage affects the speed of mounting and dismounting of the box to and from the bearing part.

In some possible embodiments, each of two ends of the mounting member in the first direction is provided with a guide portion, and along a direction leaving the center of the mounting member, a distance between a guide slope of the guide portion and the first surface in the third direction gradually decreases, where the third direction is perpendicular to the first surface. The provision of the guide portion at each of two ends of the mounting member in the first direction facilitates the push-in and pull-out of the box along a specific direction, thereby improving the accuracy and operation efficiency of the mounting and dismounting of the box of the battery to and from the bearing part.

In some possible embodiments, in the first direction, a dimension of the mounting member is smaller than a dimension of the first wall, the first direction is parallel to the first surface, and when the box is placed on the bearing part, the first direction is parallel to a direction of relative movement between the box and the bearing part. Thus, in the embodiments of this application, since limited space is reserved for the box of the battery in the battery cabinet, through the arrangement that the dimension of the mounting member in the first direction is less than the dimension of the first wall of the box in the first direction, the difficulty in smoothly pushing the box into the battery cabinet due to the excessively long dimension of the mounting member can be alleviated. Moreover, the processing costs can also be reduced.

According to a second aspect, a battery is provided, including a battery cell and the box according to the first aspect, where the battery cell is accommodated in the box.

According to a third aspect, an electric device is provided, including the battery according to the second aspect, where the battery is configured to provide electric energy for the electric device.

In some embodiments, the electric device may be a vehicle, a ship, or a spacecraft.

According to a fourth aspect, an energy storage system is provided, including the battery according to the second aspect.

In some embodiments, the energy storage system further includes a bearing part, where the bearing part is configured to bear the battery.

### BRIEF DESCRIPTION OF DRAWINGS

FIG. 1 is a schematic structural diagram of a battery cabinet according to an embodiment of this application;
FIG. 2 is a schematic structural diagram of a vehicle according to an embodiment of this application;
FIG. 3 is a schematic diagram of a battery and a bearing part according to an embodiment of this application;
FIG. 4 is a schematic diagram of a cross-section of a box of a battery according to an embodiment of this application;
FIG. 5 is an enlarged schematic diagram of region A in FIG. 4;
FIG. 6 is a front view of a battery and bearing part after assembly according to an embodiment of this application;
FIG. 7 is an enlarged schematic diagram of region B in FIG. 6;
FIG. 8 is another enlarged schematic diagram of region B in FIG. 6;
FIG. 9 is still another enlarged schematic diagram of region B in FIG. 6;
FIG. 10 is yet another enlarged schematic diagram of region B in FIG. 6;
FIG. 11 is yet another enlarged schematic diagram of region B in FIG. 6;
FIG. 12 is a schematic structural diagram of a box of a battery according to an embodiment of this application;
FIG. 13 is an enlarged schematic diagram of region C in FIG. 11; and
FIG. 14 is an enlarged schematic diagram of region D in FIG. 11.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of this application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this specification is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

With the rapid development of battery technologies, safety accidents caused by battery failures occur frequently. Therefore, higher requirements have been imposed on the safety and reliability of batteries. Various electric devices usually need to be mounted with a plurality of batteries. A simpler process of mounting, dismounting, and maintaining the box of the battery will bring a lower maintenance cost of the box of the battery, which is conducive to improving the safety and reliability performance of the box of the battery.

At present, in the art, there are mainly two common methods for mounting a box of a battery. One method includes: implementing rigid friction directly between a bottom wall of the box of the battery and a bearing part (such as a battery rack), adjusting a mounting hole on the box in place, and then fixing the box with a bolt. This method has a slow mounting and dismounting process, resulting in low mounting and dismounting efficiency of the box of the battery. The other method involves using a roller structure. To be specific, a fixing frame mounted with a roller is fixed to a battery rack, and then the box of the battery is placed on the roller. The box is moved to a mounting position through sliding of the roller, and then the box is fixed to the fixing frame through a push pin and a locking pin. This method needs to occupy a large internal space of a battery cabinet, and an entire box mounting apparatus is relatively heavy and structurally complex, with high processing costs. Furthermore, the mounting and dismounting process of the box is cumbersome and is poor in reliability.

In view of this, an embodiment of this application provides a box of a battery, where a first surface of a first wall of the box is provided with a mounting member, where a friction coefficient between the mounting member and a bearing surface of a bearing part is less than a friction coefficient between the first surface and the bearing surface, and when the box is carried on the bearing surface, the first surface faces the bearing surface. Thus, through the provision of the mounting member on the first surface of the first wall of the box of the battery, where the friction coefficient between the mounting member and the surface of the bearing part is less than the friction coefficient between the first surface and the bearing surface, the wear on the surfaces of the box of the battery and the bearing part during mounting and dismounting of the box can be reduced effectively. In addition, this facilitates rapid mounting and dismounting of the box, significantly improving the reliability of the box during mounting and dismounting. Furthermore, the structure is simple and is easy to process and low in cost.

It should be understood that the technical solutions described in this embodiment of this application are all applicable to a variety of electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

It should be understood that the technical solutions described in this embodiment of this application are not only applicable to the electric devices described above, but also applicable to all devices using batteries. For brevity, an electric device being a vehicle is used as an example for description in the following embodiments.

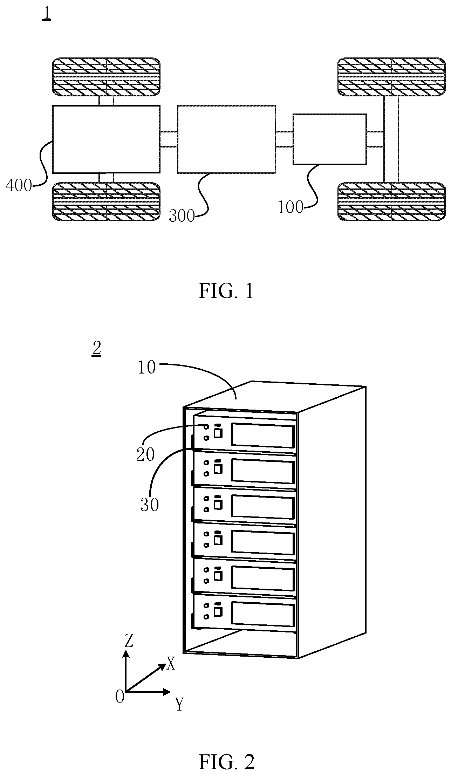

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 400, a controller 300, and a battery 100 may be provided inside the vehicle 1, where the controller 300 is configured to control the battery 100 to supply power to the motor 400. For example, the battery 100 may be disposed at the bottom, front, or rear of the vehicle 1. The battery 100 may be configured to supply power to the vehicle 1. For example, the battery 100 may be used as an operational power source for the vehicle 1 that is configured for a circuit system of the vehicle 1, for example, to satisfy power needs of start, navigation, and running of the vehicle 2. In another embodiment of this application, the battery 100 can be used not only as the operational power source for the vehicle 1, but also as a driving power source for the vehicle 1, replacing or partially replacing fossil fuel or natural gas to provide driving traction for the vehicle 1.

To meet different power usage requirements, the battery 100 in this embodiment of this application may be a battery module or a battery pack. The battery 100 may include at least one battery cell group, where the battery cell group includes a plurality of battery cells. The plurality of battery cells may be electrically connected in series, parallel, or series and parallel to form the battery 100, where being connected in series and parallel means a combination of series and parallel connections. The battery 100 may also be referred to as a battery pack. For example, a plurality of battery cells may be first connected in series, parallel, or series-parallel to form a battery module first, and then a plurality of battery modules are connected in series, parallel, or series-parallel to form the battery 100. In other words, the plurality of battery cells may be directly combined into the battery 100, or may first be combined into battery modules which are then combined into the battery 100.

The technical solutions described in this embodiment of this application are applicable to various energy storage systems, such as energy storage containers, battery cabinets, and the like.

FIG. 2 is a schematic structural diagram of a battery cabinet 2 according to an embodiment of this application. As shown in FIG. 2, the battery cabinet 2 includes an energy storage box 10, a box 20 of a battery 100, and a bearing part 30. The box 20 of the battery 100 is placed on the bearing part 30 to be fixed inside the battery cabinet 2. The battery cabinet 2 can be configured to accommodate a plurality of boxes 20 of the battery 100. For example, one or more boxes 20 may be provided. This is not limited in this embodiment of this application.

It should be understood that the battery cabinet 2 in this embodiment of this application may be a hollow structure, for example, the battery cabinet 2 in this application is a cuboid hollow structure. In addition, a shape of the battery cabinet 2 in this embodiment of this application may alternatively be flexibly configured according to actual needs. Furthermore, to facilitate transportation of the box 20 and reduce transportation costs, the battery cabinet 2 in this embodiment of this application may be configured as a battery cabinet 2 of a standard size. For example, a battery cabinet 2 of 20 inches or 40 inches can be adopted. This is just an example and is not limited in this embodiment of this application.

For ease of description, in this embodiment of this application, three directions are defined based on the cuboid battery cabinet 2, where six surfaces of the cuboid are six outer walls of the battery cabinet 2. Specifically, as shown in FIG. 2, in this embodiment of this application, a first direction X along the X-axis serves as a length direction of the battery cabinet 2. For the six walls of the battery cabinet 2, two walls perpendicular to the length direction of the battery cabinet 2 are referred to as a front wall and a rear wall, respectively. Correspondingly, the two walls can also be defined as the front and rear of the battery cabinet 2. In this embodiment of this application, a second direction Y along the Y-axis serves as a width direction of the battery cabinet 2. For the six walls of the battery cabinet 2, two walls perpendicular to the width direction of the battery cabinet 2 are referred to as a left wall and a right wall, respectively. Correspondingly, the two walls can also be defined as the left and right of the battery cabinet 2. In this embodiment of this application, a third direction Z along the Z-axis serves as a height direction of the battery cabinet 2. For the six walls of the battery cabinet 2, two walls perpendicular to the height direction of the battery cabinet 2 are referred to as a top wall and a bottom wall, respectively. Correspondingly, the two walls can also be defined as the top and bottom of the battery cabinet 2.

As shown in FIG. 2, a shape of the bearing part 30 in this embodiment of this application may be configured according to actual needs. For example, a cross-section of the bearing part 30 perpendicular to the first direction X may be L-shaped, and a side plate of the L-shaped bearing part 30 along the third direction Z is fixed to the left wall or the right wall of the battery cabinet 2. For another example, the bearing part 30 may be arranged as a thin plate extending along the first direction X and perpendicular to the third direction Z. This is just an example and is not limited in this embodiment of this application. It should be understood that the L-shaped bearing part 30 may be fixed to the battery cabinet 2 through an adhesive, a bolt, or welding. This is just an example and is not limited in this embodiment of this application.

It should be further understood that the bearing part 30 in this embodiment of this application may be a rack for bearing the box 20 in the battery cabinet 2, or it may be another mechanical apparatus configured for transporting the box 20 to the battery cabinet 2. This is just an example and is not limited in this embodiment of this application. The bearing part 30 in this embodiment of this application may also be referred to as a battery bracket, a battery rack, a bearing bracket, a bearing rack, or a bearing member.

In some embodiments, the box 20 of the battery 100 in the battery cabinet 2 in this embodiment of this application may be configured to accommodate an operational power source for a vehicle, where the power source may be configured for a circuit system of the vehicle, for example, to satisfy power needs of start, navigation, and running of the vehicle.

It should be understood that the technical solutions described in this embodiment of this application are applicable to energy storage containers of various types and sizes. The energy storage container is a highly integrated energy storage apparatus. For example, the energy storage container may be a standard container of 40 feet or 20 feet, or it may be a specific container with customized dimensions.

Specifically, the energy storage container may be a regular cuboid structure, which facilitates the fixed placement and transportation of the energy storage container. The interior of the energy storage container may be a hollow structure, where the hollow structure may include a battery compartment so that a plurality of batteries 100 may be arranged in the battery compartment. In addition to the battery compartment, the interior of the energy storage container may be divided into multiple functional compartments according to actual needs. Each functional compartment is provided with other functional devices or components for managing or assisting in the operation of the plurality of batteries 100, such as a busbar, a main control component and a thermal management component.

Such a battery 100 described above may also be referred to as an electric box, which includes a box body and one or more battery cells encapsulated in the box body. Optionally, the battery cell accommodated in the energy storage container may include a lithium-ion secondary battery, a lithium-ion primary battery, a lithium-sulfur battery, a sodium-lithium-ion battery, a sodium-ion battery, a magnesium-ion battery, or the like. This is not limited in this embodiment of this application. The battery cell may be cylindrical, flat, cuboid, or of other shapes. This is not limited in this embodiment of this application either.

Optionally, the plurality of batteries 100 arranged in the battery compartment may be connected in series, parallel, or series-parallel.

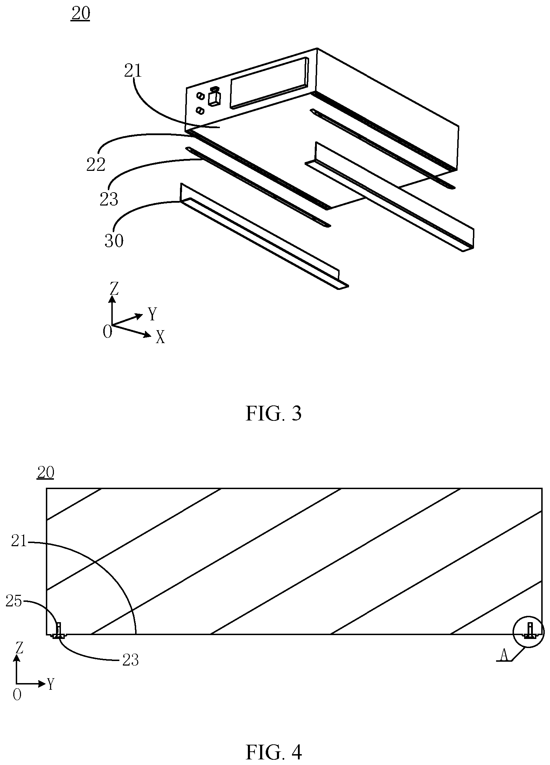

FIG. 3 is a schematic diagram of a battery 100 and a bearing part 30 according to an embodiment of this application. As shown in FIG. 3, a first surface 22 of a first wall 21 of a box 20 of the battery 100 in this embodiment of this application is provided with a mounting member 23, where a friction coefficient between the mounting member 23 and a bearing surface 31 of the bearing part 30 is less than a friction coefficient between the first surface 22 and the bearing surface 31, and when the box 20 is carried on the bearing surface 31, the first surface 22 faces the bearing surface 31 of the bearing part 30.

It should be understood that a shape of the box 20 of the battery 100 in this embodiment of this application may be configured according to actual applications. For example, the box 20 of the battery 100 may be a polyhedral structure, where the polyhedral structure is enclosed by a plurality of walls. Therefore, the box 20 of the battery 100 may include a plurality of walls. When the box 20 of the battery 100 is carried on the bearing surface 31 of the bearing part 30, the first wall 21 of the box 20 of the battery 100 faces the bearing surface 31 of the bearing part 30. As an example, the first wall 21 may be any wall of the box 20 of the battery 100, for example, the first wall 21 may be a wall with the smallest area of the box 20 of the battery 100; alternatively, the first wall 21 may be a wall with the largest area of the box 20 of the battery 100. This is not limited in this embodiment of this application.

In some embodiments, the first wall 21 may be a bottom wall of the box 20 of the battery 100.

Specifically, in this embodiment of this application, the first surface 22 is at least a part of the first wall 21, and a shape of the first surface 22 may be configured according to actual needs, where the mounting member 23 is arranged on the first surface 22. For example, the shape of the first surface 22 may be correspondingly configured according to a shape of the mounting member 23. For example, the shape of the first surface 22 may be rectangle, square, polygon, or the like. This is not limited in this embodiment of this application.

It should be understood that the friction coefficient µ in this embodiment of this application refers to a ratio of friction F between two surfaces to vertical force G acting on one of the surfaces, that is, µ = F/G. This friction coefficient is related to the roughness of the surface and is independent of a size of a contact area. Specifically, in this embodiment of this application, when the box 20 of the battery 100 is not provided with the mounting member 23, a method for measuring the friction coefficient µ between the mounting member 23 of the battery 100 and the bearing surface 31 of the bearing part 30 includes: measuring the weight G of the battery 100 first; then placing the battery 100 on the bearing part 30 of the battery cabinet 2 and placing the battery cabinet 2 on a horizontal ground, using a pulling apparatus to pull the battery 100 at a uniform speed to cause the battery 100 to move relatively to the bearing part 30, and reading a value of a pulling force f generated by the pulling apparatus at this point, where the pulling force f is parallel to the first direction X and allows for a uniform speed movement between the battery 100 and the bearing part 30; and subsequently calculating a ratio of the pulling force f to the weight G of the battery 100 to determine the friction coefficient µ between the battery 100 and the bearing surface 31 of the bearing part 30. Here, the friction coefficient µ is a kinetic friction coefficient.

It should be further understood that a method for determining the friction coefficient between the first surface 22 of the battery 100 not provided with the mounting member 23 and the bearing surface 31 of the bearing part 30 is similar to the foregoing method. The mounting member 23 can be first removed from the battery 100, and for the remaining measurement steps, refer to the foregoing method. For brevity, details are not repeated herein.

Thus, in this embodiment of this application, the friction coefficient between the mounting member 23 and the bearing surface 31 of the bearing part 30 is relatively small. In this way, as compared with the situation in which no mounting member 23 is provided on the box 20 and relative movement occurs between the first surface 22 and the bearing surface 31 of the bearing part 30, during a mounting process of the box 20, resistance generated by the relative movement between the mounting member 23 and the bearing surface 31 of the bearing part 30 is relatively small, which is conducive to the rapid mounting and dismounting of the box 23 to and from the bearing part 30. In addition, the relatively small friction coefficient between the mounting member 23 and the bearing surface 31 of the bearing part 30 leads to less wear on the surfaces of the box 20 and the bearing part 30, which can reduce damage to metal coatings of the box 20 of the battery 100 and the bearing part 30, thus prolonging the service life of the box 20 and the bearing part 30. Moreover, this method features a simple structure and low costs.

It should be understood that in this embodiment of this application, as shown in FIG. 3, the mounting member 23 and the first surface 22 may be fixed in various ways. For example, the mounting member 23 and the first surface 22 may be fixed via an adhesive. For example, in an embodiment of this application, the mounting member 23 may be fixed to the first surface 22 of the first wall 21 of the box 20 of the battery 100 via a double-sided adhesive or structural adhesive without damaging the first wall 21 of the box 20 of the battery 100. The fixing method is simple and reliable, conducive to reducing processing costs.

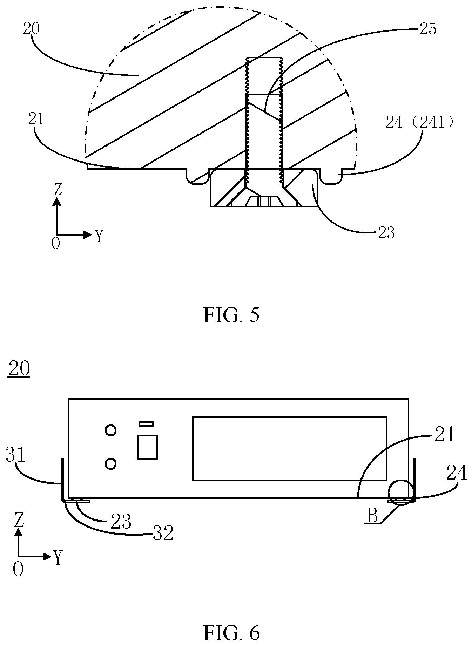

For another example, the mounting member 23 and the first wall 21 may be fixed through a bolt 25. FIG. 4 is a schematic diagram of a cross-section of a box 20 of a battery 100 according to an embodiment of this application. For example, the box 20 of the battery 100 shown in FIG. 4 may be the box 20 of the battery 100 shown in FIG. 3, and the cross-section shown in FIG. 4 is a cross-sectional view of the box 20 of the battery 100 in a direction perpendicular to the first direction X. For example, the first direction X may be parallel to a plane where the first wall 21 is located. FIG. 5 is an enlarged schematic diagram of part A in FIG. 4. As shown in FIGs. 4 and 5, in this embodiment of this application, the mounting member 23 and the first wall 21 are fixed through the bolt 25, where the bolt 25 penetrates the mounting member 23 and is partially accommodated in the first wall 21, so that the effect of fixation of the mounting member 23 to the first surface 22 of the first wall 21 of the box 20 can be further improved, alleviating sliding and detachment of the mounting member 23 on the first wall 21 of the box 20.

It should be further understood that when the mounting member 23 and the first wall 21 are fixed through the bolt 25, the bolt 25 does not protrude from a surface of the mounting member 23 in contact with the bearing part 30. Thus, in this embodiment of this application, through the arrangement that the bolt 25 does not protrude from the surface of the mounting member 23 in contact with the bearing part 30, the damage to the surface coating of the bearing part caused by the relative movement between the bolt and the bearing surface of the bearing part can be effectively reduced during the mounting and dismounting of the box 20 to and from the bearing part 30, where the damage affects the speed of mounting and dismounting of the box to and from the bearing part.

Optionally, in an embodiment of this application, the friction coefficient between the mounting member 23 and the bearing surface 31 of the bearing part 30 is less than or equal to 0.3. Thus, the friction between the box 20 and the bearing surface 31 of the bearing part 30 can be reduced during the mounting and dismounting of the box 20 to and from the bearing part 30, which can reduce the resistance generated during the relative movement between the box 20 and the bearing part 30, thereby improving the efficiency of mounting and dismounting the box 20 to and from the bearing part 30. In one possible implementation, a material with a friction coefficient less than or equal to 0.3 may be selected as the material of the mounting member 23. For example, the friction coefficient between the mounting member 23 and the bearing surface 31 of the bearing part 30 in this embodiment of this application may be 0.01, 0.02, 0.04, 0.06, 0.08, 0.10, 0.12, 0.14, 0.16, 0.18, 0.20, 0.22, 0.24, 0.28, 0.30, or a value within a range obtained by combining any two of the foregoing values.

Alternatively, in an embodiment of this application, the material of the mounting member 23 may be plastic. In this embodiment of this application, since plastic has characteristics such as self-lubricity and low friction coefficient, using plastic as the material of the mounting member 23 is conducive to reducing friction between the box 20 of the battery 100 and the bearing surface 31 of the bearing part 30, thus reducing resistance generated during the relative movement between the box 20 and the bearing part 30. This improves the operation efficiency of mounting and dismounting the box 20 of the battery 100 to and from the bearing part 30. Furthermore, plastic is easy to process and purchase, which reduces the processing costs.

Specifically, in this embodiment of this application, the material of the mounting member 23 may include polyoxymethylene, polypropylene, polycarbonate, or polyamide. Using polyoxymethylene, polypropylene, polycarbonate, or polyamide, which have characteristics such as lubricity and low friction coefficient, as the manufacturing material of the mounting member 23, is conducive to reducing the friction between the box 20 and the bearing surface 31 of the bearing part 30 in the process of mounting and dismounting the box 20 of the battery 100 to and from the bearing part 30, thereby reducing the resistance generated during the relative movement between the box 20 and the bearing part 30. This facilitates the push-in and pull-out of the box 20 and improves the operation efficiency of mounting and dismounting the box 20. Moreover, the material has relatively low costs and is easy to process and purchase.

Optionally, in an embodiment of this application, as shown in FIG. 3, at least two mounting members 23 can be spaced apart on the first surface 22 of the first wall 21 of the box 20 of the battery 100. Thus, in this embodiment of this application, according to actual needs, a plurality of mounting members 23 can be spaced apart on the first surface 22 of the first wall 21 of the box 20 of the battery 100, which is conducive to increasing a contact area between the box 20 of the battery 100 and the bearing surface 31 of the bearing part 30, so that weight of the box 20 of the battery 100 is evenly distributed and the stressed structure is improved. This avoids that the first wall 21 of the box 20 comes into contact with the bearing surface 31 of the bearing part 30 when the weight of the box 20 is too heavy for the mounting member 23 to support.

Optionally, in an embodiment of this application, as shown in FIG. 4, the mounting member 23 in this embodiment of this application may alternatively be arranged at an edge position of the first wall 21 of the box 20. In this embodiment of this application, when the box 20 is mounted and dismounted to and from the bearing part 30, an edge position of the box 20 of the battery 100 is prone to friction or collision with the bearing part 30. Therefore, through the provision of the mounting member 23 at the edge position of the first wall 21 of the box 20 of the battery 100, the wear between the edge position of the first wall 21 of the box 20 and the bearing part 30 can be reduced, thereby enhancing the safety in the process of mounting and dismounting the box 20 of the battery 100 to and from the bearing part 30.

In one possible implementation, as shown in FIG. 3, the mounting member 23 in this embodiment of this application may be arranged as a strip-shaped structure extending along a first direction X, where the first direction X is parallel to the first surface 22, and when the box 20 is placed on the bearing part 30, the first direction X is parallel to a direction of relative movement between the box 20 and the bearing part 30. Thus, in this embodiment of this application, the mounting member 23 is arranged as the strip-shaped structure extending along the first direction X and the first direction X is parallel to the direction of relative movement between the box 20 and the bearing part 30, the push-in and pull-out of the box 20 of the battery 100 on the bearing part 30 become more rapid, which is conducive to improving the operation efficiency of mounting and dismounting the box 20 of the battery 100 to and from the bearing part 30. Furthermore, this method features a simple structure and ease in processing.

In this embodiment of this application, when there is a deviation between the position of the box 20 of the battery 100 and the mounting locking position in the battery cabinet 2 during the mounting and dismounting process of the box 20 and position correction needs to be implemented, or when the box 20 is subjected to external impact during transportation, the mounting member 23 inevitably experiences lateral friction in the second direction Y, where the second direction Y is parallel to the first surface 22 and perpendicular to the first direction X. However, the mounting member 23 has relatively weak resistance to lateral friction in the second direction Y, which may easily result in sliding or detachment of the mounting member 23 along the second direction Y, thereby affecting the efficiency of mounting and dismounting the box 20, and further reducing the reliability of the box 20. Therefore, it may be considered that a limiting member is provided on the first wall 21 of the box 20 of the battery 100 to limit the sliding or detachment of the mounting member 23 along the second direction Y.

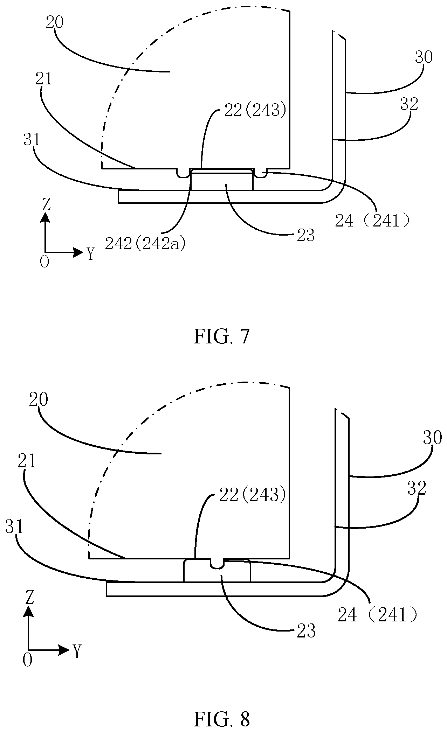

FIG. 6 is another schematic diagram of a cross-section of a box 20 of a battery 100 according to an embodiment of this application. For example, the box 20 of the battery 100 shown in FIG. 6 may be the box 20 of the battery 100 shown in FIG. 3, and the cross-section shown in FIG. 6 is a cross-section of the box 20 of the battery 100 in a direction perpendicular to the first direction X. FIGs. 7 to 11 each are an enlarged schematic diagram of part B in FIG. 6.

As shown in FIGs. 6 to 11, the first wall 21 of the box 20 of the battery 100 in this embodiment of this application is provided with a limiting structure 24, where the limiting structure 24 is configured to limit movement of the mounting member 23 in a second direction Y, the second direction Y being parallel to the first surface 22 and perpendicular to the first direction X. The provision of the limiting structure 24 on the first wall 21 of the box 20 to limit the movement of the mounting member 23 in the second direction Y reduces the contact between the first wall 21 of the box 20 and the bearing surface 31 of the bearing part 30 due to sliding or detachment of the mounting member 23 along the second direction Y, which is conducive to improving the speed of mounting and dismounting the mounting member 23 to and from the bearing part 30.

Optionally, in an embodiment of this application, as shown in FIG. 7, the foregoing limiting structure 24 is arranged as a convex structure 241 protruding from the first surface 22 of the first wall 21 of the box 20, which alleviates sliding of the mounting member 23 along the second direction Y. In addition, the convex structure 241 is arranged on an outer surface of the box 20, reducing the occupation of internal space in the box 20 of the battery 100 and increasing space utilization of the box 20.

It should be understood that a shape of a cross-section of the convex structure 241 in a direction perpendicular to the first direction X in this embodiment of this application may be configured according to actual needs, for example, it may be semicircular, square, rhombic, or the like. This is just an example and is not limited in this embodiment of this application.

Optionally, in an embodiment of this application, the convex structure 241 extends along the first direction X. In this embodiment of this application, through the arrangement that the convex structure 241 of the limiting structure 24 extends along the first direction X, the effect of fixation of the mounting member 23 by the convex structure 241 can be improved, alleviating the sliding or detachment of the mounting member 23 along the second direction Y. Moreover, the structure is simple and easy to process.

It should be understood that the convex structure 241 protruding from the first surface 22 of the box 20 in this embodiment of this application may be flexibly arranged according to actual needs. For example, the convex structure 241 may be provided on each of two sides of the mounting member 23 on the box 20 in the second direction Y. For another example, the convex structure 241 may be provided on either the left side or the right side of the mounting member 23 on the box 20 in the second direction Y.

Optionally, in an embodiment of this application, as shown in FIGs. 7, 9 and 10, the convex structure 241 is provided on each of two sides of the mounting member 23 on the box 20 in the second direction Y. Thus, in the second direction Y, through the provision of one convex structure 241 on each of the left and right sides of the mounting member 23 on the first wall 21 of the box 20 to limit the mounting member 23 between the two convex structures 241, the effect of limitation on the mounting member 23 is further improved. This is conducive to alleviating the sliding of the mounting member 23 on the first wall 21 of the box 20 of the battery 100 along the second direction Y, and improving the efficiency of mounting and dismounting the box 20 of the battery 100 to and from the bearing part 30.

It should be understood that different from the situation shown in the foregoing embodiments where the convex structure 241 is provided on one or both of two sides of the mounting member 23 on the box 20 in the second direction Y, the positional relationship between the mounting member 23 and the convex structure 241 may be flexibly arranged. For example, as shown in FIG. 8, a surface of the mounting member 23 in the first direction X is provided with a groove structure, and the convex structure 241 on the first wall 21 of the box 20 is at least partially accommodated in the foregoing groove to limit the movement of the mounting member 24 in the second direction Y, thereby alleviating the sliding or detachment of the mounting member 23 along the second direction Y. In addition, this can effectively prevent contact between the convex structure 241 and the bearing surface 31 of the bearing part 30, thereby improving the efficiency of mounting and dismounting the box 20 of the battery 100 to and from the bearing part 30.

Specifically, in this embodiment of this application, in a third direction Z, a dimension of the convex structure 241 is smaller than a dimension of the mounting member 23, the third direction Z being perpendicular to the first surface 22 of the first wall 21 of the box 20. In addition, the third direction Z is perpendicular to the first direction X and the second direction Y. In this embodiment of this application, due to a typically higher friction coefficient of the material of the convex structure 241, contact between the convex structure 241 and the bearing surface 31 of the bearing part 30 increases the resistance encountered during the mounting and dismounting of the box 20 to and from the bearing part 30, reducing the speed of mounting and dismounting the box 20 to and from the bearing part 30. Through the arrangement that the dimension of the convex structure 241 in the third direction Z is smaller than the dimension of the mounting member 23 in the third direction Z, the problem of a low mounting speed caused by contact between the convex structure 241 and the bearing surface 31 of the bearing part 30 can be alleviated effectively, thereby improving the speed of mounting and dismounting the box 20 to and from the bearing part 30. In addition, damage to the surface coatings of the box 20 and the bearing part 30 caused by rigid friction between the convex structure 241 and the bearing part 30 can be reduced.

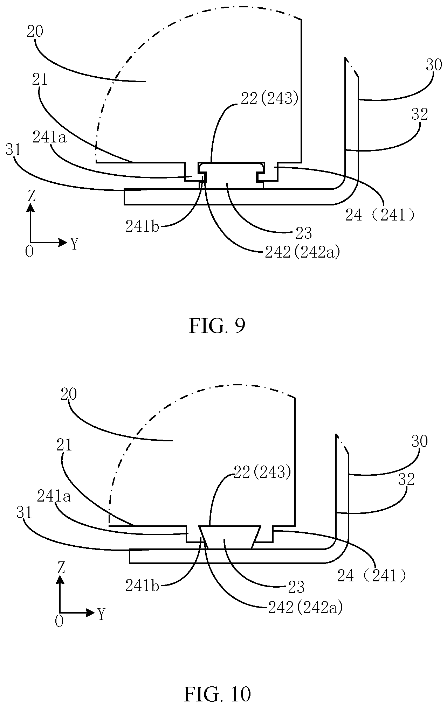

Optionally, in some embodiments, as shown in FIGs. 9 and 10, the convex structure 241 mentioned in this embodiment of this application may include a main body portion 241a and an extension portion 241b, where the main body portion 241a extends along the third direction Z, and the extension portion 241b is connected to an end of the main body portion 241a away from the first surface 22 of the first wall 21 of the box 20 of the battery 100 and extends along a direction approaching the mounting member 23. Thus, the mounting member 23 can be fixed in the second direction Y through the extension portion 241b of the convex structure 241, so as to limit the movement of the mounting member 23 in the second direction Y, and further improve the effect of limitation on the mounting member 23 by the convex structure 241.

It should be understood that in this embodiment of this application, a shape of a cross-section of the mounting member 23 in a direction perpendicular to the first direction X may be processed and manufactured according to the shape of the cross-section of the convex structure 241 along the first direction X, so that the mounting member 23 can be embedded in the convex structure 241.

Optionally, in some embodiments, as shown in FIGs. 9 and 10, the convex structure 241 on each of two sides of the mounting member 23 in this embodiment of this application in the second direction Y and the first surface 22 of the first wall 21 of the box 20 form an accommodating groove 242, an opening 242a of the accommodating groove 242 is opposite the first surface 22, and the mounting member 23 is partially accommodated in the accommodating groove 242.

Specifically, as shown in FIG. 9, the convex structure 241 includes a main body portion 241a extending along the third direction Z, and an extension portion 241b connected to the main body portion 241a and extending along a direction approaching the mounting member 23 along the second direction Y. The extension portion 241b is perpendicular to the main body portion 241a along a cross-section perpendicular to the first direction X. The convex structure 241 and the first surface 22 of the first wall 21 enclose an accommodating groove 242, where the mounting member 23 is partially accommodated in the accommodating groove 242. In addition, in the second direction Y, each of two sides of the mounting member 23 is provided with a groove, where the extension portion 241b is partially accommodated in the groove.

In some embodiments, a size of a part of the mounting member 23 accommodated in the accommodating groove 242 is larger than a size of an opening 242a of the accommodating groove 242, so as to improve the stability of the connection between the mounting member 23 and the first wall 21.

Thus, in this embodiment of this application, the convex structure 241 on each of two sides of the mounting member 23 in the second direction Y and the first surface 22 of the box 20 form an accommodating groove 242 for fixing the mounting member 23, which can effectively alleviate the sliding and detachment of the mounting member 23 along the second direction Y. In addition, through the arrangement that the mounting member 23 is partially accommodated in the accommodating groove 242, contact between the convex structure 241 and the bearing surface 31 of the bearing part 30 can be avoided, thereby reducing the damage to the surface coatings of the box 20 and the bearing part 30.

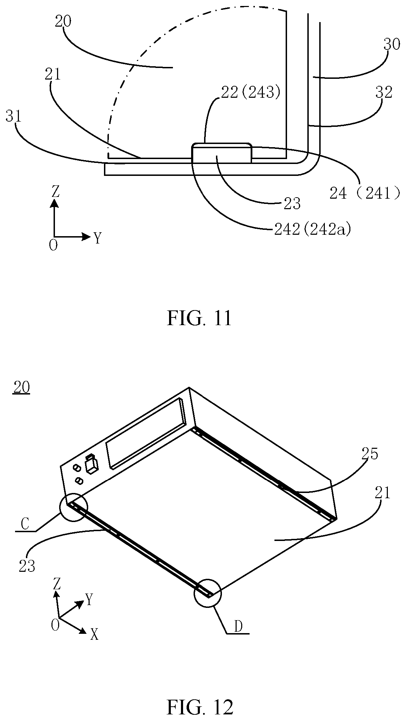

Optionally, in some embodiments, as shown in FIG. 11, the limiting structure 24 in this embodiment of this application is an accommodating groove 242 recessed in the first surface 22, an opening 242a of the accommodating groove 242 is flush with the first surface 22, and the mounting member 23 is partially accommodated in the accommodating groove 242. Thus, through the arrangement that the limiting structure 24 is the accommodating groove 242 recessed in the first surface 22 of the first wall 21 of the box 20, the sliding or detachment of the mounting member 23 along the second direction Y can be limited. Moreover, since the mounting member 23 is partially recessed in the accommodating groove 242, the problem of slow mounting speed caused by a large resistance generated during relative movement directly between the first wall 21 of the box 20 and the bearing part 30 can be alleviated and the wear on the surfaces of the box 20 and bearing part 30 can be avoided. In addition, design height of the box 20 of the battery 100 in the third direction Z can be reduced, saving a space reserved for the box 20 in the battery cabinet 2 and increasing space utilization of the battery cabinet 2.

It should be understood that in this embodiment of this application, in the second direction Y, a dimension of the opening 242a is smaller than a dimension of a bottom wall 243 of the accommodating groove 242, where the bottom wall 243 is a wall of the accommodating groove 242 opposite the opening 242a. Thus, the arrangement that the dimension of the opening 242a of the accommodating groove 242 is smaller than the dimension of the bottom wall 243 of the accommodating groove 242 helps the mounting member 23 to be fixed in the accommodating groove 242 and alleviates the sliding or detachment of the mounting member along the second direction Y and third direction Z, which is conducive to improving the effect of limitation on the mounting member 23 by the limiting structure 24.

It should be understood that in this embodiment of this application, a shape of a cross-section of the accommodating groove 242 along a direction perpendicular to the first direction X in the foregoing embodiment may be designed according to actual needs. For example, the cross-section of the accommodating groove 242 along the direction perpendicular to the first direction X in this embodiment of this application may alternatively be of any shape, such as arc and polygon. This is just an example and is not limited in this embodiment of this application.

Optionally, in some embodiments, the cross-section of the accommodating groove 242 perpendicular to the first direction X is an inverted trapezoid. Thus, through the arrangement that the cross-section of the accommodating groove 242 perpendicular to the first direction X is the inverted trapezoid, the sliding of the mounting member 23 along the second direction Y and third direction Z is limited. Furthermore, the solution provides a simple design structure and ease of molding and processing, resulting in lower manufacturing costs.

Optionally, in an embodiment of this application, the foregoing limiting structure 24 is integrally formed with the box 20 to improve the efficiency of processing and assembling of the box 20. In addition, during the mounting and dismounting of the box 20 to and from the bearing part 30, this can alleviate the problem of reduced mounting and dismounting efficiency caused by sliding or detachment of the limiting structure 24 from the first wall 21 of the box 20. Specifically, the limiting structure 24 and the box 20 may be integrally formed by machining, extrusion molding, and the like. This is just an example and is not limited in this embodiment of this application.

In some embodiments, the limiting structure 24 and the box 20 in this embodiment of this application may be processed and manufactured through split forming. For example, the limiting structure 24 may be fixed to the first wall 21 of the box 20 through an adhesive or a bolt.

In this embodiment of this application, during the mounting and dismounting of the box 20, to facilitate the movement of the box 20 to a suitable fixed position, a guide portion usually needs to be mounted on the first wall 21 of the box 20.

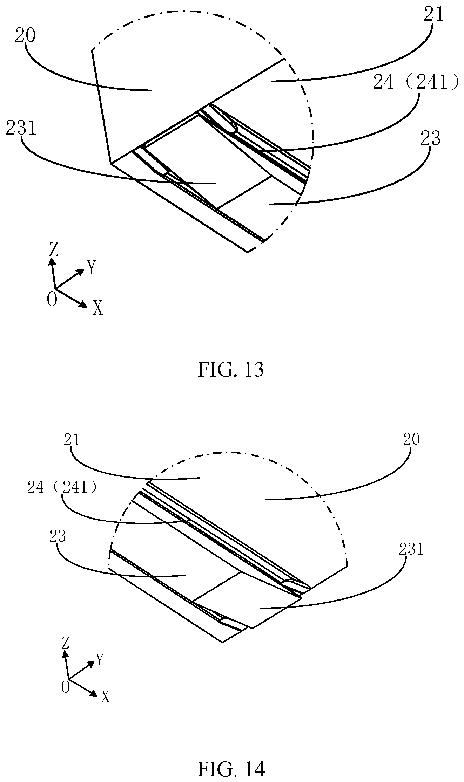

FIG. 12 is a schematic structural diagram of a box 20 of a battery 100 according to an embodiment of this application. For example, the box 20 of the battery 100 shown in FIG. 12 may be the box 20 of the battery 100 shown in FIG. 3. FIG. 13 is an enlarged schematic diagram of part C of the box 20 of the battery 100 in FIG. 12. FIG. 14 is an enlarged schematic diagram of part D of the box 20 of the battery 100 in FIG. 12.

In this embodiment of this application, as shown in FIGs. 12 to 14, each of two ends of the mounting member 23 in the first direction X is provided with a guide portion 231, and along a direction leaving the center of the mounting member 23, a distance between a guide slope of the guide portion 231 and the first surface 22 in the third direction Z gradually decreases, where the guide slope is a surface of the guide portion 231 away from the first surface 22, and the third direction Z is perpendicular to the first surface 22. Specifically, the guide slope of the guide portion 231 may also refer to a surface of the guide portion 231 opposite the first surface 22 of the box 20. Thus, the provision of the guide portion 231 at each of two ends of the mounting member 23 in the first direction Z facilitates the push-in and pull-out of the box 20 along a specific direction, thereby improving the accuracy and operation efficiency of mounting and dismounting of the box 20 of the battery 100 to and from the bearing part 30.

Optionally, in some embodiments, in a first direction X, a dimension of the mounting member 23 in this embodiment of this application is smaller than a dimension of the first wall 21, the first direction X is parallel to the first surface 22, and when the box 20 is placed on the bearing part 30, the first direction X is parallel to a direction of relative movement between the box 20 and the bearing part 30. Thus, in this embodiment of this application, since limited space is reserved for the box 20 of the battery 100 in the battery cabinet 2, through the arrangement that the dimension of the mounting member 23 in the first direction X is smaller than the dimension of the first wall 21 of the box 20 in the first direction X, the difficulty in smoothly pushing the box 20 into the battery cabinet 2, that is, a part of the box 20 is exposed outside the battery cabinet 2, due to the excessively long dimension of the mounting member 23 can be alleviated. Moreover, the processing costs can also be reduced.

Optionally, an embodiment of this application provides a battery 100 including a battery cell and a box 20 of the battery 100, where the battery cell is accommodated in the box 20 of the battery 100.

Optionally, an embodiment of this application provides an electric device including the battery 100, where the battery 100 is configured to supply power to the electric device.

Optionally, an embodiment of this application provides an energy storage system including the battery 100 and the bearing part 30, where the bearing part 30 is used to bear the battery 100.

It should be understood that relevant parts in various embodiments of this application may be a reference to each other. For brevity, details are not repeated herein.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A box (20) of a battery (100), **characterized in that** a first surface (22) of a first wall (21) of the box (20) is provided with a mounting member (23), wherein a friction coefficient between the mounting member (23) and a bearing surface (31) of a bearing part (30) is less than a friction coefficient between the first surface (22) and the bearing surface (31), and when the box (20) is carried on the bearing surface (31), the first surface (22) faces the bearing surface (31).

2. The box according to claim 1, **characterized in that** the friction coefficient between the mounting member (23) and the bearing surface (31) of the bearing part (30) is less than or equal to 0.3.

3. The box (20) according to claim 1 or 2, **characterized in that** a material of the mounting member (23) comprises plastic.

4. The box (20) according to any one of claims 1 to 3, **characterized in that** the material of the mounting member (23) comprises polyoxymethylene, polypropylene, polycarbonate, or polyamide.

5. The box (20) according to any one of claims 1 to 4, **characterized in that** the first surface (22) is provided with at least two mounting members (23) that are spaced apart.

6. The box (20) according to any one of claims 1 to 5, **characterized in that** the mounting member (23) is arranged at an edge of the first wall (21).

7. The box (20) according to any one of claims 1 to 6, **characterized in that** the mounting member (23) is a strip-shaped structure extending along a first direction, wherein the first direction is parallel to the first surface (22), and when the box (20) is placed on the bearing part (30), the first direction is parallel to a direction of relative movement between the box (20) and the bearing part (30).

8. The box (20) according to any one of claims 1 to 7, **characterized in that** the first wall (21) is further provided with a limiting structure (24), wherein the limiting structure (24) is configured to limit movement of the mounting member (23) in a second direction, the second direction being parallel to the first surface (22) and perpendicular to the first direction.

9. The box (20) according to claim 8, **characterized in that** the limiting structure (24) is a convex structure (241) protruding from the first surface (22).

10. The box (20) according to claim 9, **characterized in that** the convex structure (241) extends along the first direction.

11. The box (20) according to claim 9 or 10, **characterized in that** the convex structure (241) is provided on each of two sides of the mounting member (23) on the box (20) in the second direction.

12. The box (20) according to any one of claims 9 to 11, **characterized in that** in a third direction, a dimension of the convex structure (241) is smaller than a dimension of the mounting member (23), the third direction being perpendicular to the first surface (22).

13. The box (20) according to claim 12, **characterized in that** the convex structure (241) comprises a main body portion (241a) and an extension portion (241b), wherein the main body portion (241a) extends along the third direction, and the extension portion (241b) is connected to an end of the main body portion (241a) away from the first surface (21) and extends along a direction approaching the mounting member (23).

14. The box (20) according to any one of claims 9 to 13, **characterized in that** the convex structure (241) on each of two sides of the mounting member (23) in the second direction and the first surface (22) form an accommodating groove (242), an opening (242a) of the accommodating groove (242) is opposite the first surface (22), and the mounting member (23) is partially accommodated in the accommodating groove (242).

15. The box (20) according to claim 8, **characterized in that** the limiting structure (24) is an accommodating groove (242) recessed in the first surface (22), an opening (242a) of the accommodating groove (242) is flush with the first surface (22), and the mounting member (23) is partially accommodated in the accommodating groove (242).

16. The box (20) according to claim 14 or 15, **characterized in that** in the second direction, a dimension of the opening (242a) is smaller than a dimension of a bottom wall (243) of the accommodating groove (242), wherein the bottom wall (243) is a wall of the accommodating groove (242) opposite the opening (242a).

17. The box (20) according to any one of claims 14 to 16, **characterized in that** a cross-section of the accommodating groove (242) perpendicular to the first direction is an inverted trapezoid.

18. The box (20) according to any one of claims 8 to 17, **characterized in that** the limiting structure (24) is integrally formed with the box (20).

19. The box (20) according to any one of claims 1 to 18, **characterized in that** the mounting member (23) and the first surface (22) are fixed via an adhesive.

20. The box (20) according to any one of claims 1 to 19, **characterized in that** the mounting member (23) and the first wall (21) are connected via a bolt (25), wherein the bolt (25) penetrates the mounting member (23) and is partially accommodated in the first wall (21).

21. The box (20) according to claim 20, **characterized in that** the bolt (25) does not protrude from a surface of the mounting member (23) in contact with the bearing part (30).

22. The box (20) according to any one of claims 7 to 21, **characterized in that** each of two ends of the mounting member (23) in the first direction is provided with a guide portion (231), and along a direction leaving the center of the mounting member (23), a distance between a guide slope of the guide portion (231) and the first surface (22) in a third direction gradually decreases, wherein the guide slope is a surface of the guide portion (231) away from the first surface (22), and the third direction is perpendicular to the first surface (22).

23. The box (20) according to any one of claims 1 to 22, **characterized in that** in a first direction, a dimension of the mounting member (23) is smaller than a dimension of the first wall (21), the first direction is parallel to the first surface (22), and when the box (20) is placed on the bearing part (30), the first direction is parallel to a direction of relative movement between the box (20) and the bearing part (30).

24. A battery (100), comprising:
a battery cell; and
the box (20) according to any one of claims 1 to 23, wherein the battery cell is accommodated in the box (20).

25. An electric device, comprising the battery (100) according to claim 24, wherein the battery (100) is configured to supply power to the electric device.

26. An energy storage system, comprising:
the battery (100) according to claim 24.

27. The energy storage system according to claim 26, **characterized in that** the energy storage system further comprises:
a bearing part (30), configured to bear the battery (100).
